# EUROPÄISCHE PATENTSCHRIFT

(11) **EP 1 180 452 B1**
(45) Veröffentlichungstag und Bekanntmachung des Hinweises auf die Patenterteilung: **23.04.2008**
(21) Anmeldenummer: 01115882.1
(22) Anmeldetag: 29.06.2001
(51) Int. Cl.: B60R 5/04, B60R 11/06, B60R 7/02, B60R 11/00

(54) **Vorrichtung zur Fixierung von formstabilen Koffern in einem Laderaum eines Kraftfahrzeuges**
Fixing device for rigid suitcases in a load compartment of a vehicle
Dispositif de fixation de valises rigides dans le compartiment à bagage d'un véhicule

(30) Priorität: 09.08.2000 DE 10038752
(43) Veröffentlichungstag der Anmeldung: 20.02.2002
(73) Patentinhaber: BOS GmbH & Co. KG, 73773 Aichwald (DE)
(72) Erfinder: Schlecht, Werner P., 71665 Vaihingen/Enz-Aurich (DE)
(74) Vertreter: Patentanwälte Ruff, Wilhelm, Beier, Dauster & Partner

(56) Entgegenhaltungen:
- EP-A- 0 128 810
- DE-U- 9 402 459
- FR-A- 2 592 285
- FR-A- 2 762 815
- FR-A- 2 781 731
- US-A- 4 325 531
- US-A- 5 395 019

## Beschreibung

Die Erfindung betrifft eine Vorrichtung zur Fixierung von formstabilen Koffern in einem Laderaum eines Kraftfahrzeugs.

Es ist allgemein bekannt, in einem Laderaum eines Kombi-Personenkraftwagens im Bereich des Laderaumbodens Halteösen vorzusehen, die als Verankerung für Spanngurte oder elastische Haltestrapse dienen können, mittels derer Gepäckstücke auf dem Laderaumboden festgezurrt werden können.

Die FR 2781731 A1 offenbart eine Vorrichtung zur Fixierung eines kistenartigen Koffers im Bereich eine Laderaumbodens eines Kraftfahrzeugs. Der Koffer wird auf einem Führungsschlitten befestigt, dessen Führungsschienen längs des Laderaumbodens verfahrbar und in verschiedenen Position fixierbar ist.

Aus der EP 0218810 A1 ist eine Kofferbefestigung auf einem Gepäckträger eines Zweirades bekannt, bei der der Koffer auf eine rahmenartige Platte aufgeschoben und mit Hilfe von Befestigungselementen auf der Gepäckträgerplatte fixiert wird.

Aufgabe der Erfindung ist es, eine Vorrichtung der eingangs genannten Art zu schaffen, die eine verbesserte Sicherung von Koffern ermöglicht.

Diese Aufgabe wird dadurch gelöst, dass in einem Laderaumboden Aufnahmeschienen derart eingelassen sind, dass Oberkanten der Aufnahmeschienen bündig mit einer Oberfläche des Laderaumbodens abschließen, wobei den Aufnahmeschinen Sicherungsmittel für die Koffer derart zugeordnet sind, dass jeweils eine Aufnahmeschiene für die Sicherung eines Koffers vorgesehen ist, sowie dass korrespondierende, in fluchtend mit der jeweiligen Aufnahmeschiene auf dem Laderaumboden abgestellter Position der Koffer formschlüssig mit den laderaumseitigen Sicherungsmitteln in Eingriff bringbare Sicherungselmente an den Koffern vorgesehen sind, und dass Betätigungsmittel zum manuellen Lösen der Sicherungsmittel und Sicherungselemente voneinander vorgesehen sind, die laderaumseitig oder kofferseitig angeordnet sind. Dadurch wird eine besonders sichere Verankerung der Koffer am Laderaumboden erzielt, wobei vorteilhaft auch die Koffer selbst auf die Sicherungsmittel in den Aufnahmeschienen abgestimmt sind. Zusätzliche Befestigungsmittel wie Spanngurte, Verzurrbänder, elastische Strapse oder ähnliches werden dadurch vermieden. Der Aufwand zum Fixieren und Lösen ist durch die bereits integrierten Sicherungselemente und Sicherungsmittel gegenüber bekannten Fixierungsvorrichtungen wesentlich reduziert. Bei kofferseitiger Anordnung der Betätigungsmittel können die Koffer in jedem Laderaum eines Kraftfahrzeugs untergebracht werden, der mit entsprechenden Aufnahmeschienen und Sicherungsmitteln versehen ist. Bei laderaumseitiger Anordnung der Betätigungsmittel können die Koffer selbst einfacher und damit kostengünstiger gestaltet sein als bei der kofferseitigen Anordnung der Betätigungsmittel. Unter der Formstabilität der Koffer ist sowohl die Zusammensetzung aus zwei formstabilen Schalen als auch die lediglich im Rahmen- und/oder Bodenbereich formstabile Gestaltung von Koffern anzusehen, wobei insbesondere die Seitenflächen nachgiebig gestaltet sein können.

In Ausgestaltung der Erfindung ist die formschlüssige Verbindung zwischen Sicherungsmitteln, Sicherungselementen und Aufnahmeschienen auf die Höhe von Fahrzeugaufprallbelastungen ausgelegt. Dadurch ergibt sich eine crashsichere Anbindung der Koffer am Laderaumboden, d.h. die Koffer verbleiben auch bei Fahrzeugaufprallbelastungen in ihrer im Laderaum verankerten Position.

In weiterer Ausgestaltung der Erfindung sind die Sicherungselemente an einer Unterseite jedes Koffers positioniert. Dadurch wird vorteilhaft ein stehender Transport der Koffer ermöglicht.

In weiterer Ausgestaltung der Erfindung sind die Aufnahmeschienen rohbaufest verankert. Dadurch wird eine besonders stabile Sicherung für die Koffer erzielt, die eine crashsichere Anbindung gewährleistet. Die versenkte Anordnung der Aufnahmeschienen gewährleistet, dass die Oberseite der Aufnahmeschienen bündig mit der Oberfläche des Laderaumbodens positioniert ist, wodurch sich insgesamt eine ebene Laderaumfläche ergibt.

In weiterer Ausgestaltung der Erfindung weisen die Betätigungsmittel ein manuell bedienbares Drehelement auf, das über einen Übertragungsmechanismus die Sicherungselemente oder die Sicherungsmittel in die geöffnete oder die arretierte Position überführt. Diese Ausgestaltung ist ergonomisch besonders günstig. Der Übertragungsmechanismus überträgt die Drehbewegung des Drehelementes in die entsprechende Bewegung der Sicherungselemente oder Sicherungsmittel in die geöffnete oder die arretierte Position.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt in perspektivischer Darstellung ein Heck eines Kombi-Personenkraftwagens mit entfernter Heckklappe, wodurch Aufnahmeschienen in einem Laderaumboden der erfindungsgemäßen Kofferfixierung erkennbar sind,
- Fig. 2: in perspektivischer Darstellung einen Ausschnitt des Laderaumes nach Fig. 1 mit zwei fixierten Koffern,
- Fig. 3: in teilweise aufgebrochener Seitenansicht die Positionierung eines Koffers auf dem Laderaumboden nach Fig. 2 und
- Fig. 4: die Darstellung nach Fig. 3, wobei der teilweise aufgeschnittene Koffer in seiner arretierten Stellung gezeigt ist.

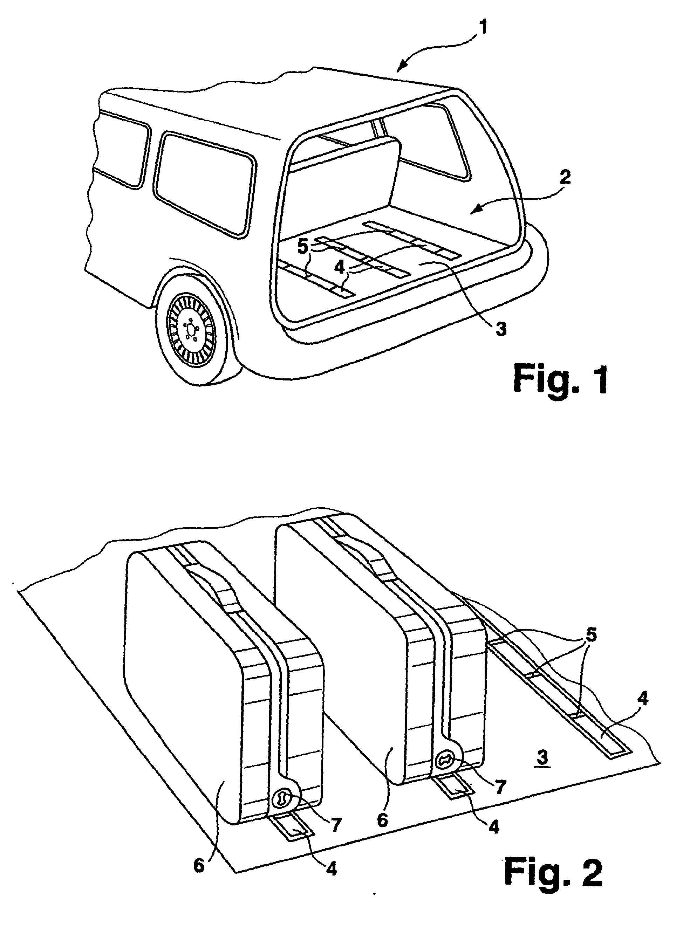

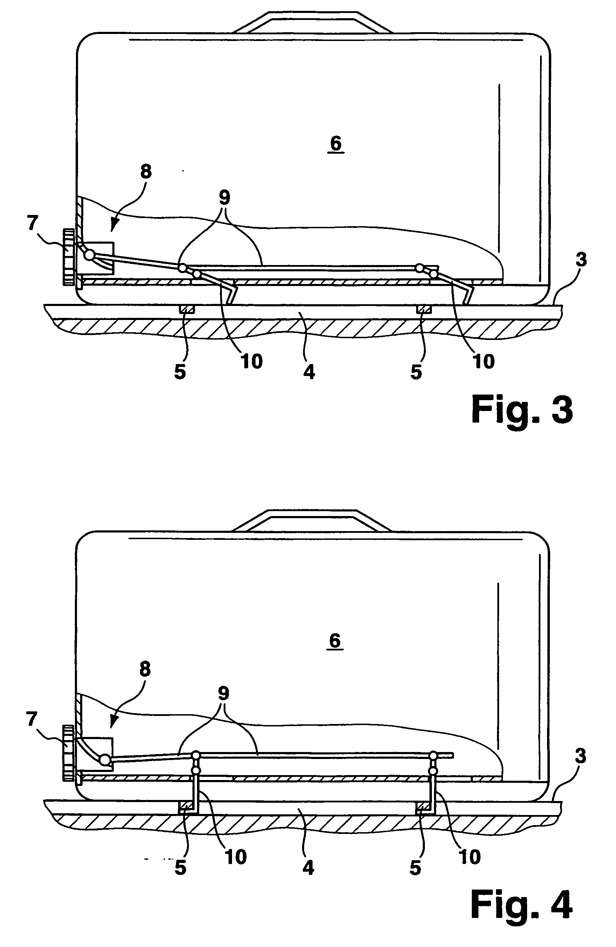

Ein Kraftfahrzeug in Form eines Kombi-Personenkraftwagens 1 weist gemäß Fig. 1 in einem Heckbereich einen Laderaum 2 auf, der nach vorne durch eine Rückenlehne einer Fondsitzbank begrenzt ist. Der Laderaum 2 weist einen Laderaumboden 3 auf, der im wesentlich durchgängig eben gestaltet ist. Der Landeraumboden 3 ist mit mehreren, im vorliegenden Ausführungsbeispiel mit drei parallel zueinander und in Fahrzeuglängsrichtung ausgerichteten Aufnahmeschienen 5 versehen, die derart in den Laderaumboden 3 eingelassen sind, dass die Oberkanten der Aufnahmeschienen 4 bündig mit der Oberfläche des Laderaumbodens 3 abschließen. Die Aufnahmeschienen 4 sind mit Sicherungsmitteln in Form von mehreren, in Abstand hintereinander angeordneten Querstegen 5 versehen, die einstückig mit den Aufnahmeschienen 4 verbunden sind. Die Aufnahmeschienen 4 bilden somit gemeinsam mit den Sicherungsmitteln 5 jeweils ein leiterförmiges Längsprofil, das im Querschnitt im wesentlichen U-förmig verläuft. Die Querstege 5 dienen als Sprossen des leiterförmigen Längsprofiles. Die Querstege 5 bilden Verankerungspunkte für entsprechende, als korrespondierende Sicherungselemente an formstabilen Koffern 6 vorgesehene Arretierhaken 10, wie anhand der Fig. 3 und 4 erkennbar ist.

Die formstabilen Koffer 6 können mittels der Sicherungshaken 10 in aufrecht stehender Position gemäß Fig. 2 im Laderaum 3 verankert werden. Hierzu sind im Bodenbereich des jeweiligen Koffers 6 zwei Arretierhaken 10 um eine horizontale und quer verlaufende Schwenkachse zwischen einer Freigabeposition (Fig. 3) und einer Arretierposition (Fig. 4) schwenkbeweglich. Zur Verschwenkung der Arretierhaken 10 ist ein Übertragungsmechanismus 8, 9 vorgesehen, der aus einem Hebelgestänge 9 und einer Kurvenführung 8 besteht. Mittels der Kurvenführung 8 wird eine Drehbewegung eines manuell bedienbaren Drehelementes 7 in die Schub- und Zugbewegung des Hebelgestänges 9 übertragen, an dem wiederum die Arretierhaken 10 angelenkt sind. Durch eine Drehung des außenseitig an einer Vorderseite des jeweiligen Koffers 6 angeordneten Drehelementes 7 können somit die Arretierhaken 10 in die Freigabeposition bzw. die Arretierposition überführt werden.

Um die Koffer 6 im Laderaum 2 fixieren zu können, werden die Koffer 6 zunächst fluchtend mit den jeweiligen Aufnahmeschienen 4 auf dem Laderaumboden 3 abgestellt. Anschließend werden die als Drehknaufe gestalteten Drehelemente 7 jeweils derart verdreht, dass die Arretierhaken 10 sich in ihre Arretierposition bewegen, in der die Arretierhaken 10 den jeweiligen Quersteg 5 der jeweiligen Aufnahmeschiene 4 hinter- und untergreifen. In normaler Fahrtrichtung gesehen sind die Arretierhaken 10 somit jeweils hinter den Querstegen angeordnet, so dass die Koffer 6 bei starken Verzögerungen des Fahrzeugs durch die Arretierhaken formschlüssig blockiert werden. Auch ein Abheben der Koffer 6 in der Arretierposition nach oben wird vermieden, indem der jeweilige untere Schenkel des Arretierhakens 10 durch das Untergreifen des jeweiligen Quersteges 5 ein entsprechendes Anheben formschlüssig blockiert. Die Kurvenführung 8 ist selbsthemmend gestaltet oder mit entsprechenden Sperrelementen versehen, um die Arretierposition so lange zu sichern, bis der jeweilige Drehknauf 7 erneut in die Freigabeposition zurückgedreht wird.

Bei nicht dargestellten Ausführungsbeispielen der Erfindung sind die Betätigungsmittel, die die Übertragung der entsprechenden Öffnungs- oder Arretierbewegung auf die Sicherungelemente oder Sicherungsmittel vornehmen, im Bereich der Aufnahmeschienen und somit laderaumbodenseitig vorgesehen. Die Unterseiten der Koffer brauchen dann lediglich mit einfach gestalteten Sicherungselementen in Form von Rastköpfen, Rastausnehmungen, Stegabschnitten oder ähnlichem versehen sein, wobei dann die entsprechend beweglichen Sicherungsmittel, die aus der Freigabe- in die Arretierposition überführbar sind, im Bereich des Laderaumbodens, d.h. im Bereich der Aufnahmeschienen, vorgesehen sind.

## Patentansprüche

1. Vorrichtung zur Fixierung von formstabilen Koffern in einem Laderaum eines Kraftfahrzeugs, **dadurch gekennzeichnet, dass** in einem Laderaumboden (3) Aufnahmeschienen (4) derart eingelassen sind, dass Oberkanten der Aufnahmeschienen (4) bündig mit einer Oberfläche des Laderaumbodens (3) abschließen, wobei den Aufnahmeschienen (4) Sicherungsmittel (5) für die Koffer (6) derart zugeordnet sind, dass jeweils eine Aufnahmeschiene (4) für die Sicherung eines Koffers (6) vorgesehen ist, sowie dass korrespondierende, in fluchtend mit der jeweiligen Aufnahmeschiene (4) auf dem Laderaumboden (3) abgestellter Position der Koffer (6) formschlüssig mit den laderaumseitigen Sicherungsmitteln (5) in Eingriff bringbare Sicherungselemente (10) an den Koffern (6) vorgesehen sind, und dass Betätigungsmittel (7, 8, 9) zum manuellen Lösen der Sicherungsmittel (5) und Sicherungselemente (10) voneinander vorgesehen sind, die laderaumseitig oder kofferseitig angeordnet sind.

2. Vorrichtung nach Anspruch 1, **dadurch gekennzeichnet, dass** die formschlüssige Verbindung zwischen Sicherungsmitteln (5), Sicherungselementen (10) und Aufnahmeschienen (4) auf die Höhe von Fahrzeugaufprallbelastungen ausgelegt ist.

3. Vorrichtung nach Anspruch 1 oder 2, **dadurch gekennzeichnet, dass** die Sicherungselemente (10) an einer Unterseite jedes Koffers positioniert sind.

4. Vorrichtung nach Anspruch 1 oder 2, **dadurch gekennzeichnet, dass** die Aufnahmeschienen (4) rohbaufest verankert sind.

5. Vorrichtung nach Anspruch 1 oder 2, **dadurch gekennzeichnet, dass** die Betätigungsmittel ein manuell bedienbares Drehelement (7) aufweisen, das über einen Übertragungsmechanismus (8) die Sicherungselemente (10) oder die Sicherungsmittel in die geöffnete oder die arretierte Position überführt.

## Claims

1. Device for fixing dimensionally stable suitcases in a load compartment of a motor vehicle, **characterised in that** receiving rails (4) are let into a load compartment floor (3) in such a manner that upper edges of the receiving rails (4) are flush with the surface of the load compartment floor (3), wherein securing means (5) for the suitcases (6) are associated with the receiving rails (4) in such a manner that one receiving rail (4) in each case is provided for securing a suitcase (6), and corresponding securing elements (10) are provided on the suitcases (6), which securing elements (10) can be positively engaged with the securing means (5) on the load compartment when the suitcases (6) are placed on the load compartment floor (3) in a position in alignment with the respective receiving rail (4), and actuating means (7, 8, 9) for manually disengaging the securing means (5) and securing elements (10) from each other are provided, which are arranged on the load compartment or the suitcase.

2. Device according to claim 1, **characterised in that** the positive connection between securing means (5), securing elements (10) and receiving rails (4) is designed to withstand vehicle collision loads.

3. Device according to claim 1 or 2, **characterised in that** the securing elements (10) are positioned on an underside of each suitcase.

4. Device according to claim 1 or 2, **characterised in that** the receiving rails (4) are anchored in the body shell.

5. Device according to claim 1 or 2, **characterised in that** the actuating means have a manually operable rotary element (7) which, by way of a transmission mechanism (8), moves the securing elements (10) or the securing means to the open or the arrested position.

## Revendications

1. Dispositif de fixation de valises rigides dans un coffre d'un véhicule automobile, **caractérisé en ce que** des rails de réception (4) sont encastrés dans un plancher de coffre (3) de sorte que des bords supérieurs des rails de réception (4) se terminent à fleur avec une surface du plancher de coffre (3), des moyens de blocage (5) pour les valises (6) étant associés aux rails de réception (4) de manière qu'il est prévu respectivement un rail de réception (4) pour le blocage d'une valise (6) et que sont prévus au niveau des valises (6), des éléments de blocage (10) correspondants pouvant être mis en prise par correspondance de forme avec les moyens de blocage (5) côté coffre lorsque les valises (6) sont posées en alignement avec le rail de réception (4) respectif sur le plancher de coffre (3), et **en ce que** sont prévus des moyens d'actionnement (7, 8, 9) pour la désolidarisation manuelle des moyens de blocage (5) et des éléments de blocage (10) les uns des autres, qui sont agencés côté coffre ou côté valise.

2. Dispositif selon la revendication 1, **caractérisé en ce que** la liaison par correspondance de forme entre les moyens de blocage (5), les éléments de blocage (10) et les rails de réception (4) est réalisée pour résister aux sollicitations de collision du véhicule.

3. Dispositif selon la revendication 1 ou 2, **caractérisé en ce que** les éléments de blocage (10) sont positionnés au niveau d'une face inférieure de chaque valise.

4. Dispositif selon la revendication 1 ou 2, **caractérisé en ce que** les rails de réception (4) sont solidement ancrés à la structure.

5. Dispositif selon la revendication 1 ou 2, **caractérisé en ce que** les moyens d'actionnement présentent un élément rotatif (7) à commande manuelle qui amène les éléments de blocage (10) ou les moyens de blocage dans la position ouverte ou la position bloquée par le biais d'un mécanisme de transmission (8).
